(19) Europäisches Patentamt
European Patent Office
Office européen des brevets

(11) **EP 3 560 621 A1**

(12) **EUROPEAN PATENT APPLICATION**

(43) Date of publication:
**30.10.2019 Bulletin 2019/44**

(51) Int Cl.:
**B21D 53/16** (2006.01)    **C21D 9/40** (2006.01)
**C23C 8/26** (2006.01)    **C22C 38/10** (2006.01)
**C22C 38/12** (2006.01)    **F16G 1/00** (2006.01)
**F16G 5/00** (2006.01)

(21) Application number: **19170568.0**

(22) Date of filing: **23.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2018 JP 2018086960**

(71) Applicant: **TOYOTA JIDOSHA KABUSHIKI KAISHA**
**Toyota-shi, Aichi-ken 471 8571 (JP)**

(72) Inventors:
• **MAEKAWA, Yoshihiro**
**Toyota-shi, Aichi-ken, 471-8571 (JP)**
• **NISHIDA, Koji**
**Toyota-shi, Aichi-ken, 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **ENDLESS METAL RING AND METHOD OF PRODUCING THE SAME**

(57) A method of producing an endless metal ring includes welding ends of a maraging steel plate such that the maraging steel plate has a ring shape, annealing the maraging steel plate with the ring shape in a furnace at 845°C or higher, and nitriding the annealed maraging steel plate, wherein, during the annealing, a dew point temperature indicating an amount of water in the furnace is adjusted such that a value of the dew point temperature [°C] is equal to or higher than a value obtained by subtracting 35 from time [min] at an annealing temperature of 845°C or higher.

## FIG. 1

```
        START
          |
  WELDING PROCESS   ── S11
          |
  ANNEALING PROCESS ── S12
          |
  NITRIDING PROCESS ── S13
          |
         END
```

EP 3 560 621 A1

**Description**

BACKGROUND OF THE INVENTION

1. Field of the Invention

The present invention relates to an endless metal ring and a method of producing the same.

2. Description of Related Art

A belt type continuously variable transmission (CVT) is known as a CVT. As a power transmission belt for a belt type CVT, an endless metal belt including a belt member obtained by laminating metal rings and a plurality of elements supported on the belt member is known. The belt member receives tension, bending stress, a frictional force and the like during power transmission. Therefore, the belt member and metal rings constituting the belt member are required to have characteristics such as strength and abrasion resistance, and various studies have been conducted thereon. The metal ring for a belt member is generally processed into a ring shape by welding ends of a steel plate to each other.

The inventors disclosed a method of producing a specific endless metal ring in which a specific maraging steel plate is used and an annealing temperature is 875°C to 900°C in Japanese Unexamined Patent Application Publication No. 2013-252549 (JP 2013-252549 A). JP 2013-252549 A describes that, when an annealing temperature is set relatively high at 875°C or higher, it is possible to reduce constriction of a welded part.

SUMMARY OF THE INVENTION

The inventors conducted extensive studies and as a result, found that constriction of a welded part is reduced by setting an annealing temperature to be high, but titanium nitride easily grows on the surface of the maraging steel plate, and the titanium nitride deteriorates fatigue strength of the endless metal ring.

The present invention provides an endless metal ring with reduced constriction of a welded part and having excellent fatigue strength, and a method of producing the same.

A method of producing an endless metal ring according to a first aspect of the present disclosure includes welding ends of a maraging steel plate such that the maraging steel plate has a ring shape, annealing the maraging steel plate with the ring shape in a furnace at 845°C or higher, and nitriding the annealed maraging steel plate, wherein, during the annealing, a dew point temperature indicating an amount of water in the furnace is adjusted such that a value of the dew point temperature [°C] is equal to or higher than a value obtained by subtracting 35 from time [min] at an annealing temperature of 845°C or higher.

In one embodiment of the method of producing an endless metal ring, the furnace may have a nitrogen gas supply path and a hydrogen gas supply path, the nitrogen gas supply path may have a branch path with a water supply source, and the dew point temperature may be adjusted by adjusting a flow rate of nitrogen gas that passes through the branch path.

An endless metal ring according to a second aspect of the present disclosure includes a maraging steel plate including 5.75 mass% to 6.05 mass% of molybdenum, 12.0 mass% to 17.0 mass% of cobalt, 17.0 mass% to 20.0 mass% of nickel, 0.4 mass% to 0.5 mass% of titanium, 0 mass% to 0.15 mass% of aluminum, and a remainder including iron and inevitable impurities, wherein the thickness of a titanium nitride layer in the maraging steel plate is 2 $\mu$m or less.

According to the present invention, it is possible to provide an endless metal ring with reduced constriction of a welded part and having excellent fatigue strength, and a method of producing the same.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a flowchart showing an example of a method of producing an endless metal ring of the present embodiment;
FIG. 2 is a graph for explaining Formula (1);
FIG. 3 is a schematic view showing an example of a method of introducing water into a furnace;
FIG. 4 is a graph showing the relationship between an annealing temperature and an amount of titanium nitride generated;
FIG. 5 is a graph showing the relationship between an annealing time and an amount of titanium nitride generated;

FIG. 6 is a graph showing the relationship between a dew point temperature and an amount of titanium nitride generated;

FIG. 7 is a graph showing results of a durability fatigue test of endless metal belts using endless metal rings of an example and a comparative example;

FIG. 8 is a schematic sectional view showing an example of an endless metal belt; and

FIG. 9 is a schematic partial perspective view showing an example of an endless metal belt.

## DETAILED DESCRIPTION OF EMBODIMENTS

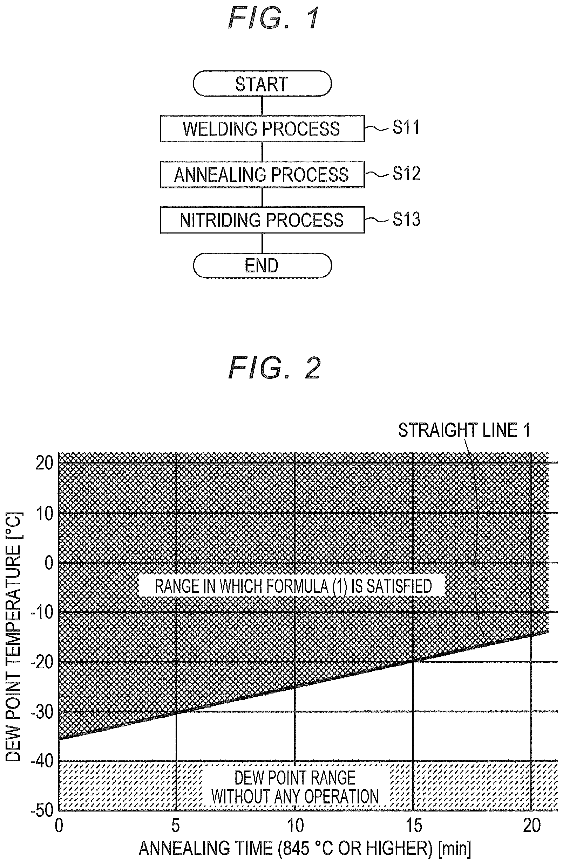

First, a method of producing an endless metal ring of the present embodiment will be described below with reference to FIG. 1. FIG. 1 is a flowchart showing an example of the method of producing an endless metal ring of the present embodiment. The method of producing an endless metal ring of the present embodiment includes at least a welding process (S11) in which ends of a maraging steel plate are combined together and the combined part is welded to form a ring shape, a process (S12) in which the maraging steel plate with a ring shape is annealed under specific conditions to be described below, and a process (S13) in which the annealed steel plate is nitrided, and may include a molding process, a cutting process, a rolling process, a solutionizing process, a circumferential length adjusting process, and the like as necessary. Hereinafter, the processes will be described.

Before the welding process, generally, a molding process in which the maraging steel plate is formed in a ring shape is provided. In the molding process, a long maraging steel plate with a roller shape is cut into a predetermined size, and bent into a ring shape so that ends thereof are combined with each other. Bending can be performed using a roller or a mold. Here, the width of the ring shape in this step may be a width for a predetermined CVT belt and a cylindrical shape larger than a width for a predetermined CVT belt may be used. Next, in the welding process (S11), the ends combined in a molding process are welded together. The welding method may be appropriately selected from among various welding methods, for example, laser welding and plasma welding.

Next, the maraging steel plate formed in a ring shape in the welding process is annealed (S12). In the present embodiment, a dew point temperature indicating an amount of water vapor in a furnace is adjusted so that the following Formula (1) is satisfied and annealing is performed at 845°C or higher.

$$\text{Formula (1): (Dew point temperature [°C])} \geq \text{(time [min] at an annealing temperature of } 845°C \text{ or higher) -35[°C]}$$

In the method of producing an endless metal ring of the present embodiment, when annealing is performed under conditions in which Formula (1) is satisfied, constriction of a welded part is reduced, and an amount of titanium nitride formed on the surface of the maraging steel plate is reduced, and thus it is possible to reduce deterioration of fatigue strength.

Here, Formula (1) will be described with reference to FIG. 2. FIG. 2 is a graph for explaining Formula (1) in which the horizontal axis represents an annealing time and the vertical axis represents a dew point temperature. Here, in the present embodiment, the annealing time is a time from when the temperature in a furnace reaches 845°C until the temperature falls below 845°C. In addition, the dew point temperature is a temperature at which condensation starts when it is assumed that air containing water vapor in the furnace is cooled and is an index of an amount of water vapor in the furnace. A straight line 1 in FIG. 2 is a straight line of (dew point temperature [°C]) = (time [min] at an annealing temperature of 845°C or higher) - 35 [°C]. Generally, the temperature in the furnace during annealing is high, and an amount of water vapor decreases so that the dew point temperature becomes -40°C or lower (a dew point range without any operation in FIG. 2). In the present embodiment, when annealing is performed at a high temperature of 845°C or higher, it is possible to reduce constriction of the welded part. In addition, when water is introduced into the furnace during annealing and the dew point temperature increases, even if annealing is performed at a high temperature of 845°C or higher, excessive growth of titanium nitride in the subsequent nitriding process is curbed, and it is possible to improve fatigue strength.

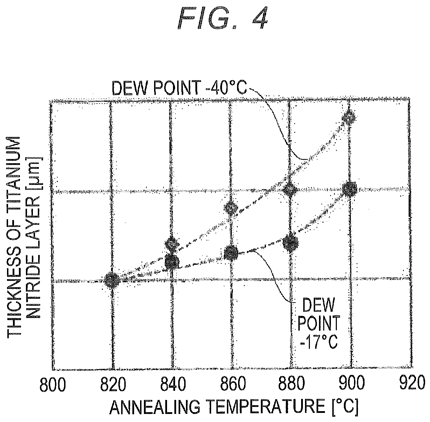

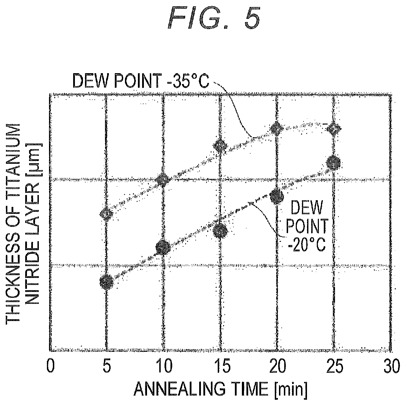

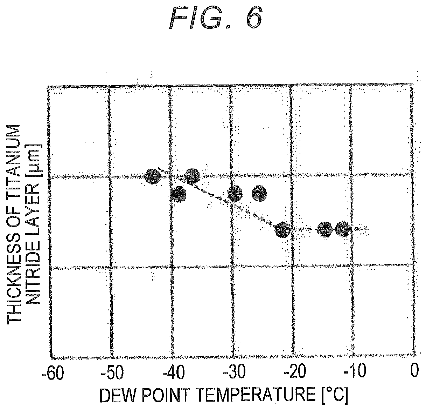

Here, the relationship between annealing conditions and an amount of a nitride generated will be described with reference to FIG. 4 to FIG. 6. FIG. 4 is a graph showing the relationship between an annealing temperature and an amount of titanium nitride generated (for an annealing time of 15 minutes). FIG. 5 is a graph showing the relationship between an annealing time and an amount of titanium nitride generated (at an annealing temperature of 880°C). In addition, FIG. 6 is a graph showing the relationship between a dew point temperature and an amount of titanium nitride generated when annealing is performed at 880°C for 15 minutes. As shown in FIG. 4 and FIG. 5, it can be understood that, when an annealing temperature and an annealing time are aligned, generation of titanium nitride is reduced at a higher dew point temperature. In addition, as shown in the example in FIG. 6, under annealing conditions of 880°C for 15 minutes, an effect of reducing generation of titanium nitride is exhibited up to a dew point temperature of about -20°C. The inventors performed measurement under various conditions, and as a result, found that generation of titanium nitride is reduced in a range in which Formula (1) is satisfied. In addition, it can be clearly understood that, when annealing is performed at 875°C or higher, it is possible to reduce constriction of the welded part. Here, as shown in FIG. 2, the straight line 1 has a slope of 1. That is, in Formula (1), (time [min] at an annealing temperature of 845°C or higher) is multiplied by a coefficient 1 [°C/min], and units of terms are the same.

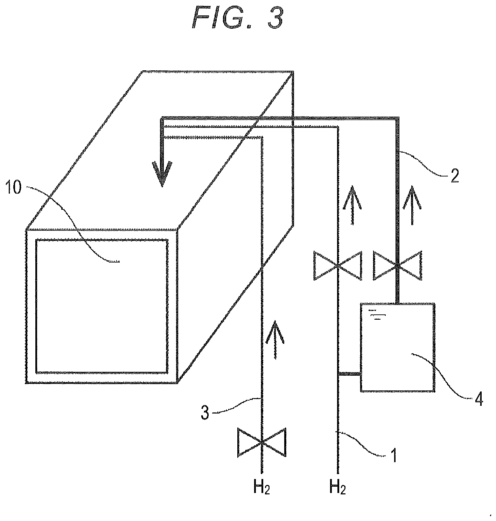

In the present embodiment, a method of introducing water into a furnace is not particularly limited. A preferable example will be described with reference to FIG. 3. FIG. 3 is a schematic view showing an example of a method of introducing water into a furnace. In the example in FIG. 3, a furnace for annealing 10 has a nitrogen gas supply path 1 and a hydrogen gas supply path 3, and the nitrogen gas supply path 1 has a branch path 2 with a water supply source 4 therein. In the present embodiment, when a flow rate of nitrogen gas that passes through the branch path 2 is adjusted, an amount of water introduced into the furnace is adjusted, and it is possible to adjust the dew point temperature.

In the method of producing an endless metal ring of the present embodiment, as necessary, a cutting process, a rolling process, a solutionizing process, a circumferential length adjusting process, and the like may be provided after the annealing process (S12) and before the nitriding process (S13). The cutting process is a process in which, when the ring has a cylindrical shape, it is cut into a predetermined width, and a plurality of rings are formed. As necessary, the obtained rings may be subjected to barrel polishing or the like in order to remove burrs formed during cutting. The rolling process is a process in which a ring with a predetermined width is rolled to obtain a predetermined circumferential length and thickness. The thickness of the ring may be appropriately adjusted depending on applications, and as an example, it can be about 100 $\mu$m to 200 $\mu$m.

After the rolling process, the solutionizing process may be provided. In the solutionizing process, it is possible to remove processing stress generated during rolling. For example, the solutionizing process can be performed under conditions of in a range of 820°C to 860°C for 1 minute to 3 minutes. The circumferential length adjusting process is a process in which the circumferential length is corrected so that a plurality of rings after rolling can be laminated. In the circumferential length adjusting process, for example, first, two rotating pulleys of which rotation shafts are parallel to each other and which are provided to be movable in approaching and separating directions are prepared. Next, a metal ring is wound around the rotating pulleys, and the rotation shafts are then gradually separated while rotating the pulleys, and thus the metal ring is stretched.

Next, the ring after the annealing process is additionally subjected to an aging process as necessary, and is then subjected to the nitriding process (S13). In the aging process, for example, an aging treatment can be performed under a nitrogen atmosphere or a reducing atmosphere at a temperature of about 450°C to 500°C for about 90 minutes to 180 minutes. In addition, for example, the nitriding process can be performed under conditions of an atmosphere containing 5 volume% to 15 volume% of ammonia gas, 1 volume% to 3 volume% of hydrogen gas, with the remainder made up of nitrogen gas, and a temperature of about 400°C to 450°C for about 40 minutes to 120 minutes. A nitrogen diffusion layer is formed in a range of about 20 $\mu$m to 30 $\mu$m from the surface according to the nitriding treatment, and surface hardness is improved.

Next, an endless metal ring of the present embodiment will be described. The endless metal ring of the present embodiment is an endless metal ring produced according to the method of producing an endless metal ring, and a titanium nitride layer has a thickness of 2 $\mu$m or less. When such an endless metal ring is used, it is possible to increase the lifespan of the CVT belt.

Maraging steel used for an endless metal ring is a steel material containing 0.03% or less of C (carbon), and 30% or more of Mo (molybdenum), Ni (nickel), Co (cobalt), Ti (titanium), and Al (aluminum) in total, and is a steel material having high strength and high strength and toughness according to aging after martensitizing.

The chemical composition of the maraging steel may be appropriately adjusted within the above range. In the present embodiment, a maraging steel plate including 5.75 mass% to 6.05 mass% of molybdenum, 12.0 mass% to 17.0 mass% of cobalt, 17.0 mass% to 20.0 mass% of nickel, 0.4 mass% to 0.5 mass% of titanium, and 0 mass% to 0.15 mass% of aluminum with the remainder being made up of iron and inevitable impurities is preferable.

When 5.75 mass% to 6.05 mass% of molybdenum is included, it is possible to improve strength and toughness without deteriorating ductility. On the other hand, when 5.75 mass% or more of molybdenum is included, molybdenum easily segregates in the welded part, but molybdenum is easily solid-solutionized in a crystal structure of iron due to an action of cobalt included at 12.0 mass% to 17.0 mass%, and segregation is reduced. In addition, when 17.0 mass% to 20.0 mass% of nickel is included, it has an action of stably forming a low carbon martensite structure and forms an intermetallic compound with aluminum and titanium, and contributes to improving strength. In addition, titanium included at 0.4 mass% to 0.5 mass% combines with nickel, and forms an intermetallic compound $Ni_3Ti$ or $Ni_3(Al, Ti)$ necessary for obtaining internal hardness. In addition, this is a nitride forming element, and can form a nitrogen diffusion layer on the surface of maraging steel to obtain surface hardness. In addition, aluminum combines with nickel and forms an intermetallic compound NiAl or $Ni_3Al$ necessary for obtaining internal hardness. In addition, since aluminum is also a nitride forming element, it can form fine AlN during the nitriding treatment to obtain surface hardness. On the other hand, when 0.15 mass% or less of aluminum is included, formation of oxide type inclusions that reduce fatigue strength is minimized. Accordingly, aluminum is preferably included at more than 0 and 0.15 mass% or less. The remainder other than molybdenum, cobalt, nickel, titanium, and aluminum described above may be iron and impurities.

The endless metal ring of the present embodiment can be suitably used for an endless metal belt that constitutes a drive belt that moves circumferentially between a drive shaft pulley and a driven shaft pulley of a vehicle.

The present invention will be described below in detail with reference an example and a comparative example. Here, the present invention is not limited to the following description.

<Example 1: Production of endless metal ring>

An endless metal ring was produced using a maraging steel plate including 5.75 mass% to 6.05 mass% of molybdenum, 12.0 mass% to 17.0 mass% of cobalt, 17.0 mass% to 20.0 mass% of nickel, 0.4 mass% to 0.5 mass% of titanium, and 0 mass% to 0.15 mass% of aluminum with the remainder being made up of iron and inevitable impurities according to the production method described above. In the annealing process, a flow rate of nitrogen gas through a water supply source was controlled, and annealing was performed at 880°C for 15 minutes while a dew point temperature was adjusted to -20°C. The thickness of the titanium nitride layer in the obtained endless metal ring was 2 μm.

<Comparative Example 1: Production of endless metal ring>

An endless metal ring of Comparative Example 1 was obtained in the same manner as in Example 1 except that the dew point temperature was not adjusted during the annealing process in Example 1, and annealing was performed at 880°C for 15 minutes. Here, the dew point temperature in the furnace during the annealing process was -45°C. In addition, the thickness of the titanium nitride layer in the obtained endless metal ring was 4 μm.

[Durability fatigue test]

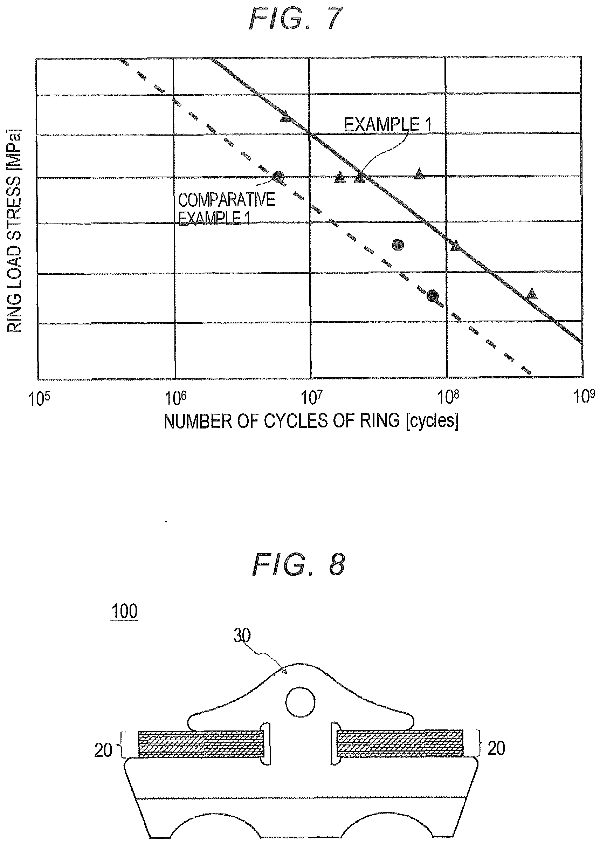

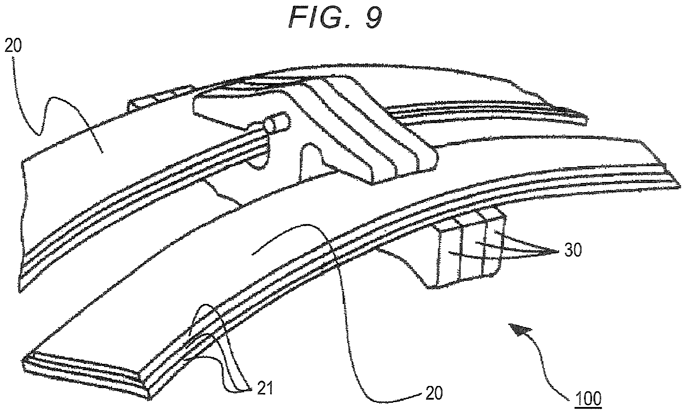

The endless metal ring obtained in Example 1 was subjected to circumferential length adjustment according to the production method and laminated to obtain a 9-layered belt member 20. Two belt members were used and an element 30 was disposed as shown in FIG. 8 and FIG. 9 to produce an endless metal belt 100 of Example 1. In addition, an endless metal belt of Comparative Example 1 was produced using the endless metal ring of Comparative Example 1 in place of the endless metal ring of Example 1 in the above. The durability fatigue test was performed on the endless metal belts of Example 1 and Comparative Example 1. In the durability fatigue test, the endless metal belt was wound around two pulleys, the ring was circulated while load stress was applied, and the number of cycles until breakage occurred was measured. The durability fatigue test was repeatedly performed while changing the load stress. The results are shown in FIG. 7. FIG. 7 is a graph showing the durability fatigue test results of the example and the comparative example, in which the vertical axis represents the load stress on the ring and the vertical axis represents the number of cycles until breakage occurred. In addition, in FIG. 7, triangular points indicate measurement results of the endless metal belt of Example 1, and circular points indicate the measurement result of Comparative Example 1. As shown in FIG. 7, it can be understood that the endless metal belt of Example 1 had a lifespan about 5 times that of the endless metal belt of Comparative Example 1. In this manner, according to the method of producing an endless metal ring of the present embodiment, it can be clearly understood that it is possible to obtain an endless metal belt with reduced constriction of a welded part, and having excellent fatigue strength and a prolonged lifespan.

**Claims**

1. A method of producing an endless metal ring, comprising:

   welding ends of a maraging steel plate such that the maraging steel plate has a ring shape;
   annealing the maraging steel plate with the ring shape in a furnace at 845°C or higher; and
   nitriding the maraging steel plate that is annealed,
   wherein, during the annealing, a dew point temperature indicating an amount of water in the furnace is adjusted such that a value of the dew point temperature [°C] is equal to or higher than a value obtained by subtracting 35 from time [min] at an annealing temperature of 845°C or higher.

2. The method according to claim 1, wherein
   the furnace has a nitrogen gas supply path and a hydrogen gas supply path,
   the nitrogen gas supply path has a branch path with a water supply source, and

the dew point temperature is adjusted by adjusting a flow rate of nitrogen gas that passes through the branch path.

3. An endless metal ring, comprising:

a maraging steel plate including 5.75 mass% to 6.05 mass% of molybdenum, 12.0 mass% to 17.0 mass% of cobalt, 17.0 mass% to 20.0 mass% of nickel, 0.4 mass% to 0.5 mass% of titanium, 0 mass% to 0.15 mass% of aluminum, and a remainder including iron and inevitable impurities,
wherein a thickness of a titanium nitride layer in the maraging steel plate is 2 μm or less.

*FIG. 1*

```
            ┌──────────────┐
            │    START     │
            └──────────────┘
                   │
        ┌──────────────────────┐
        │   WELDING PROCESS    │─── S11
        └──────────────────────┘
                   │
        ┌──────────────────────┐
        │  ANNEALING PROCESS   │─── S12
        └──────────────────────┘
                   │
        ┌──────────────────────┐
        │  NITRIDING PROCESS   │─── S13
        └──────────────────────┘
                   │
            ┌──────────────┐
            │     END      │
            └──────────────┘
```

*FIG. 2*

STRAIGHT LINE 1

RANGE IN WHICH FORMULA (1) IS SATISFIED

DEW POINT RANGE WITHOUT ANY OPERATION

DEW POINT TEMPERATURE [°C]

ANNEALING TIME (845 °C OR HIGHER) [min]

# FIG. 3

FIG. 4

FIG. 5

FIG. 6

## FIG. 7

## FIG. 8

FIG. 9

Europäisches
Patentamt
European
Patent Office
Office européen
des brevets

**EUROPEAN SEARCH REPORT**

Application Number

EP 19 17 0568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2013 252549 A (TOYOTA MOTOR CORP; HITACHI METALS LTD) 19 December 2013 (2013-12-19) * the whole document * | 1-3 | INV. B21D53/16 C21D9/40 C23C8/26 C22C38/10 C22C38/12 F16G1/00 F16G5/00 |
| A | MAYER H ET AL: "Very high cycle fatigue of nitrided 18Ni maraging steel sheet", INTERNATIONAL JOURNAL OF FATIGUE, ELSEVIER, AMSTERDAM, NL, vol. 64, 12 February 2014 (2014-02-12), pages 140-146, XP028843967, ISSN: 0142-1123, DOI: 10.1016/J.IJFATIGUE.2014.02.003 * the whole document * | 1-3 | |
| A | EP 1 176 224 A1 (NISSAN MOTOR [JP]; DOWA MINING CO [JP]) 30 January 2002 (2002-01-30) * claims 1-22; figures 1-11 * | 1-3 | |
| A | JP S62 224665 A (TOYOTA CENTRAL RES & DEV) 2 October 1987 (1987-10-02) * claims 1-3 * | 1-3 | TECHNICAL FIELDS SEARCHED (IPC) B21D C22C F16P C23C C21D F16G |

The present search report has been drawn up for all claims

| Place of search | Date of completion of the search | Examiner |
|---|---|---|
| Munich | 14 June 2019 | Liu, Yonghe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 19 17 0568

This annex lists the patent family members relating to the patent documents cited in  the above-mentioned European search report.
The members are as contained in the European Patent Office EDP file on
The European Patent Office is in no way liable for these particulars which are merely given for the purpose of information.

14-06-2019

| Patent document cited in search report | | Publication date | Patent family member(s) | | Publication date |
|---|---|---|---|---|---|
| JP 2013252549 | A | 19-12-2013 | JP<br>JP | 5973244 B2<br>2013252549 A | 23-08-2016<br>19-12-2013 |
| EP 1176224 | A1 | 30-01-2002 | EP<br>US | 1176224 A1<br>2002014281 A1 | 30-01-2002<br>07-02-2002 |
| JP S62224665 | A | 02-10-1987 | JP<br>JP | H07116585 B2<br>S62224665 A | 13-12-1995<br>02-10-1987 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013252549 A